# EUROPEAN PATENT APPLICATION

(11) **EP 2 750 010 A1**
(43) Date of publication of application: **02.07.2014**
(21) Application number: 11865410.2
(22) Date of filing: 17.11.2011
(51) Int. Cl.: G06F 3/048

(54) **ELECTRONIC-BOOK PAGE TURNING METHOD AND APPARATUS, AND MOBILE DEVICE**

(30) Priority: 30.09.2011 CN 201110301846
(71) Applicant: ZTE Corporation, Shenzhen, Guangdong 518057 (CN)
(72) Inventor: WU, Hongchao, Shenzhen Guangdong 518057 (CN)
(74) Representative: Carangelo, Pierluigi
(86) International application number: PCT/CN2011/082352
(87) International publication number: WO 2012/151907

(57) **Abstract**

Disclosed are an electronic-book page turning method and apparatus, and a mobile device. The electronic-book page turning method comprises: a touched area of a touch screen of a terminal device is detected; according to the touched area, the page turning speed of an electronic book displayed on the touch screen is determined. The present invention can solve the problem of the page turning in the prior art that the turning speed cannot be controlled and the page number cannot be precisely located while implementing fast page turning.

## Description

### TECHNICAL FIELD

The present invention relates to the communication field and in particular to an electronic-book page turning method and apparatus, and a mobile device.

### BACKGROUND

Electronic book is a revolutionary way of reading emerging in recent years, which displays a simulation books interface through a digital terminal device so as to convey text information to users. The electronic book has the advantages of easy to carry and a large amount of information storage. Firstly, the electronic book enables the users to read the contents of any book on a portable digital terminal device by digitizing texts, and this reading way makes people to abandon the heavy physical books. Secondly, the current digital devices can store massive text information through a built-in memory or through a network server.

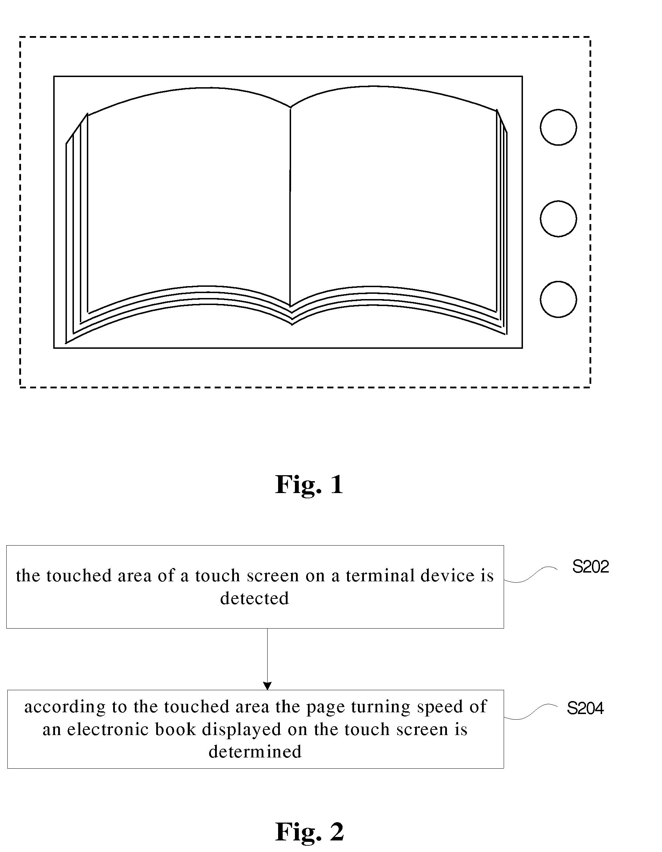

In order to satisfy that the users require to experience the feelings for reading traditional books, at present, it is common that the design of the electronic book on the interfaces and the operations simulates the physical books. Fig. 1 is a schematic diagram of a terminal device which simulates a physical book, and the existing interface simulation is usually realized by displaying the appearance of a physical book in a display of a digital terminal. The operational simulation performed on a simulation book which is displayed in the display is realized by operating the simulation interface on the touch screen of the digital terminal. In the process of reading the simulation book, page turning is the most frequently used operation, which has a great influence on the experience of human-computer interaction.

At present, there are two common page turning operations: one realizes the turning of simulation pages by paddling on the touch screen, this way is close to a physical book page-turn method but cannot realize a rapidly continuous page turning; and the other realizes the page turning by clicking a particular page-turn button, wherein the button can be a physical key on the touch screen or on the device, and this way can realize a rapidly page turning, but the turning speed cannot be controlled and the page number cannot be accurately located, and the independently designed key damages the simulation of the electronic book.

With respect to the problem of the page turning in relevant art that the turning speed cannot be controlled and the page number cannot be precisely located while implementing fast page turning in the prior art, no effective solution has been proposed at present.

### SUMMARY

Provided are an electronic-book page turning method and apparatus, and a mobile device, so as to at least solve the above-mentioned problem of the page turning in relevant art that the turning speed cannot be controlled and the page number cannot be precisely located while implementing fast page turning.

According to one aspect of the present invention, provided is an electronic-book page turning method, comprising: detecting a touched area of a touch screen on a terminal device; and determining, according to the touched area, page turning speed of an electronic book displayed on the touch screen.

Preferably, determining, according to the touched area, the page turning speed of the electronic book displayed on the touch screen comprises: a size of the touched area is directly proportional to the page turning speed of the electronic book; or the size of the touched area is inversely proportional to the page turning speed of the electronic book.

Preferably, the touched area comprises: an area touched by at least one user's finger.

Preferably, determining, according to the touched area, the page turning speed of an electronic book displayed on the touch screen comprises: detecting a capacitance value of a capacitor composed of a finger and the screen body of the touch screen; and determining that the touched area by a finger touch on the screen body increases when it is detected that the capacitance value of the capacitor increases, and speeding up the page turning speed of the electronic book.

Preferably, detecting the touched area of the touch screen on the terminal device comprises: detecting the touched area of at least one specified location on the touch screen.

Preferably, after determining, according to the touched area, the page turning speed of the electronic book displayed on the touch screen, the method further comprises: the electronic book performing page turning according to the page turning speed.

Preferably, after the electronic book performs page turning according to the page turning speed, if it is detected that the touch screen is touched again, then the page turning speed of the electronic book is redefined according to a touched area.

According to another aspect of the present invention, provided is an electronic-book page turning apparatus, comprising: a detection module configured to detect a touched area of a touch screen on a mobile device; and a determination module, configured to determine, according to the touched area, page turning speed of an electronic book displayed on the touch screen.

Preferably, the determination module is further configured to determine the page turning speed of the electronic book displayed on the touch screen according to the following rules: a size of the touched area is directly proportional to the page turning speed of the electronic book; or the size of the touched area is inversely proportional to the page turning speed of the electronic book.

Preferably, the detection module is further configured to detect the touched area of at least one specified location on the touch screen.

According to another aspect of the present invention, provided is a mobile device, comprising the above-mentioned electronic-book page turning apparatus.

In the embodiments of the present invention, a corresponding mapping relation is established between the touched area of a touch screen on a terminal device and the page turning speed of the electronic book, wherein the turning speed is determined according to the touched area, if the speed is required to be controlled, it is only need to control the touched area, and then the turning speed can be controlled and the page number can be precisely located while implementing fast page turning, without using the key of an independent device, which guarantees the simulation of the electronic books.

### BRIEF DESCRIPTION OF THE DRAWINGS

Drawings, provided for further understanding of the present invention and forming a part of the specification, are used to explain the present invention together with embodiments of the present invention rather than to limit the present invention, wherein:
Fig, 1 is a schematic diagram of a terminal device for simulating physical books according to relevant art;
Fig. 2 is a processing flowchart for an electronic-book page turning method according to an embodiment of the present invention;
Fig. 3 is a structural schematic diagram of an electronic device 300 according to an embodiment of the present invention;
Fig. 4 is a flowchart for performing the electronic-book page turning method by using the device as shown in Fig. 3 according to the embodiments of the present invention;
Fig. 5 is a schematic diagram of a terminal device for simulating physical books according to an embodiment of the present invention; and
Fig. 6 is a structural schematic diagram of an electronic-book page turning apparatus according to an embodiment of the present invention.

### DETAILED DESCRIPTION OF THE EMBODIMENTS

The embodiments are described in conjunction with the drawings as follows. It shall be understood that the embodiments of the present application and the features of the embodiments can be combined with each other if there is no conflict.

As mentioned in relevant art, at present, there are two common page turning operations: one realizes the turning of simulation pages by paddling on the touch screen, this way is close to a physical book page-turn method but cannot realize a rapidly continuous page turning; and the other realizes the page turning by clicking a particular page-turn button, wherein the button can be a physical key on the touch screen or on the device, and this way can realize a rapidly page turning, but the turning speed cannot be controlled and the page number cannot be accurately located, and the independently designed key damages the simulation of the electronic book.

Through the page turning operation in the relevant art, the turning speed cannot be controlled and the page number cannot be precisely located while implementing fast page turning. In order to solve the above-mentioned technical problem, the embodiments of the present invention provide an electronic-book page turning method, and the processing flowchart thereof as shown in Fig. 2, which comprises:
step S202, the touched area of a touch screen on a terminal device is detected; and
step S204, according to the touched area the page turning speed of an electronic book displayed on the touch screen is determined.

In the embodiments of the present invention, a corresponding mapping relation is established between the touched area of a touch screen on a terminal device and the page turning speed of the electronic book, wherein the turning speed is determined according to the touched area, if the speed is required to be controlled, it is only need to control the touched area, and then the turning speed can be controlled and the page number can be precisely located while implementing fast page turning, without using the key of an independent device, which guarantees the simulation of the electronic books.

In the embodiments of the present invention, a corresponding mapping relation is established between the touched area of a touch screen on a terminal device and the page turning speed of the electronic book, and preferably, the specific mapping rules thereof can be as follows:
the size of the touched area is directly proportional to the page turning speed of the electronic book; or,
the size of the touched area is inversely proportional to the page turning speed of the electronic book.

Specifically using which mapping relation can be pre-set in the terminal device, and when it is implemented, the screen can be touched according to the directly proportional mapping relation or the inversely proportional mapping relation that has been set.

Since a user usually uses a finger to touch the touch screen on a terminal device, the touched area is usually an area touched by a user's finger. In practical applications, a user can also use a proper object or an accessory to operate the touch screen but not limit to a finger, for example, a touch pen, etc.

The flow as shown in Fig. 2, when step S202 is implemented, when detecting the touched area of the touch screen on the terminal device, the measurement may be performed at any position of the touch screen, preferably, the touched area of at least one specified location on the touch screen can be detected, and when it is implemented, the sensitivity of the specified location can be improved and the costs can be reduced while ensuring the sensitivity, and without the full screen of the touch screen keep the same sensitivity.

As shown in Fig. 2, step S204 refers to that the page turning speed of the electronic book displayed on the touch screen may be determined according to the touched area, if the touch screen is a capacitive screen, then a capacitor can be composed of a finger and the screen body of the touch screen so as to generate an electric field; and when the touched area (covered area) by a finger touch on the screen body increases, then the capacitance value of the capacitor increases and the page turning speed of the electronic book speeds up. On the side of the terminal device, the terminal device can detect the capacitance of a capacitor composed of the user's finger and the screen body of the touch screen; and when it is detected that the capacitance value of the capacitor increases, it is determined that the covered area by the user's finger touch on the screen body increases, and the terminal device could speed up the page turning speed of the electronic book.

After the page turning speed is determined, the electronic book performs the page turning according to the page turning speed. After the electronic book performs page turning according to the page turning speed, if it is detected that the touch screen is touched again, then the page turning speed of the electronic book is redefined according to a touched area.

The implementation of the technical solution is further described below in details with reference to the drawings.

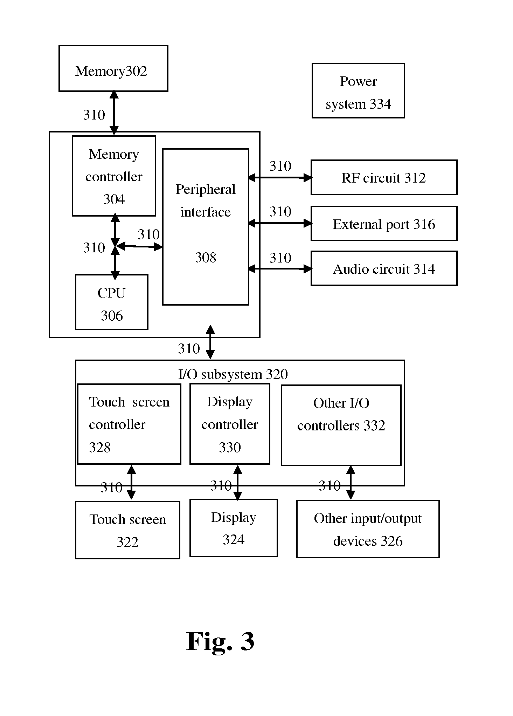

The embodiment of the present invention provides an electronic device (see Fig. 3), which can be referred to as device 300. Device 300 comprises a memory 302, a memory controller 304, one or more processing units (CPU) 306, a peripheral interface 308, an RF (radio frequency) circuit 312, an audio circuit 314, an external port 316, an input/output (I/O) subsystem 320, a touch screen 322, a display 324, other input/output devices 326, a touch screen controller 328, a display controller 330 and other input/output device controllers 332. These components perform communication through one or more communication buses or a signal line 310. Device 300 can be any electronic device, comprising but not limiting to a hand-held computer, a mobile phone, a media player, a personal digital assistant (PDA), etc., and also comprising combinations of two or more therein. It should be understood that device 300 is only an example of an electronic device 300, device 300 can have more or less components than that illustrated, or have different component configurations. Various components as shown in Fig. 3 can be realized by using hardware, software or a combination thereof, comprising one or more signal processing and application-specific integrated circuits.

Memory 302 may comprise a random access memory, and can also comprise one or more disk memory devices, flash devices or other non-volatile memories. Memory control 304 can control the access of other components, such as CPU 306 and peripheral interface 308, of device 300 to memory 302.

Input and output peripherals of the device are coupled to CPU 306 and memory 302 by the Peripheral interface 308. One or more processors 306 run various software programs stored in memory 302 so as to execute various functions of device 300 and process data.

RF circuit 332 receives and transmits electromagnetic waves. RF circuit 332 converts the electrical signals into the electromagnetic waves or converts the electromagnetic waves into the electrical signals, and communicates with a communication network or other communication devices via the electromagnetic waves.

Audio circuit 314 provides an audio interface between a user and device 300. Audio circuit 314 receives audio data from peripheral interface 308, and converts the audio data into electrical signals and transmits the electrical signals to a loudspeaker. The loudspeaker converts the electrical signal into acoustic waves that can be heard by a person. Audio circuit 314 also receives electrical signals converted from the acoustic waves by the microphone. Audio circuit 314 converts the electrical signals into the audio data and transmits the audio data to peripheral interface 308 so as to process.

I/O subsystem 320 provides an interface between the input/output peripherals of device 300 and peripheral interface 308 of device 300, and the input/output peripherals, for example, touch screen 322, display 324 and other input/output devices 326. I/O subsystem 320 comprises a touch screen controller 328, a display controller 330 and one or more controllers 332 used for other output or control devices.

Touch screen 322 and display 324 respectively provide an input interface and an output interface between the device and the user. Display 324 displays visible output to the users, wherein the output can comprise texts, graphs, videos and any combination thereof. Touch screen 322 is a touch-sensitive surface accepting user input, which detects a touch on touch screen 322 together with the touch screen controller 328, and converts the detected touch into an interaction with a user interface object on the display. Touch screen 322 and touch screen controller 328 in the present invention refer in particular to a touch technique, such as the capacitive technique, which can detect the touched area.

The embodiment of the present invention takes the capacitive technique for example, firstly, the contact area sensing principle is described in detail. Capacitance refers to the capability for accommodating an electric field. The capacitance of a common parallel plate capacitor is C = εS / d, where ε is a dielectric constant of a medium between plates, S is the area of the plate, and d is the distance between the two plates; it can be seen that when the distance between the two plates is a constant, if an overlapping area between the two plates increases, the capacitance will increase. When the capacitive touch screen is touched by a finger, a finger and the screen body compose a capacitor so as to generate an electric field, and when the touched area increases, the capacitance between a finger and the screen body would also increase. The embodiments of the present invention do not exclude that there are other touch techniques for detecting the size of a covered area, in these techniques, a user can use a proper object or an accessory to operate the touch screen 322, but not limit to a finger.

Device 300 also comprises a power system 334 which is configured to supply power for various components. The power system 334 can comprise a power management system, one or more powers (for example, a battery, an alternating current (AC)), a charging system, a power fail detection circuit, a power converter and any other component associated with the generation, management and distribution of electrical energy in a portable device.

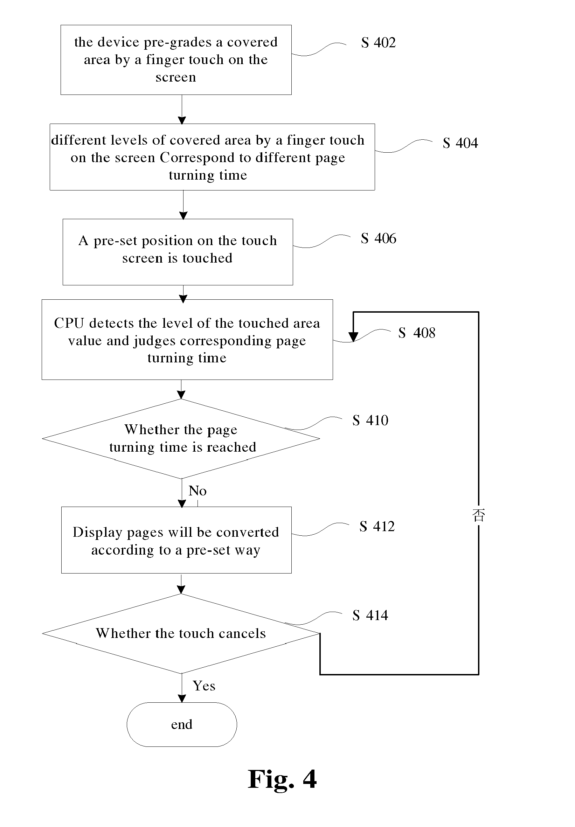

Fig. 4 is a flowchart for performing the electronic-book page turning method by using the device as shown in Fig. 3 in an embodiment of the present invention, which comprises step S402 and step S414.

Step S402, the device pre-grades a covered area by a finger touch on the screen. The grading principle is: taking the capacitive touch technique for example, the device can detect the capacitance value between the finger and the touch screen, and when the distance between the finger and the screen is a constant, there is a positive correlation between the capacitance value and the covered area by the finger press on the screen. The grading steps are: firstly, the device defines two capacitance values Cmin and Cmax respectively corresponding to the minimum covered area and the maximum covered area by a finger touch on the screen which can be detected by the touch screen, then, the device grades the difference values between the Cmin and the Cmax by a pre-set function (for example, a linear function) and a pre-set grade, and the capacitance of each level corresponds to the same level of covered area by a finger touch on the screen.

Step S404, the device corresponds different levels of covered area by a finger touch on the screen to different page turning time, generally, this correlation is a negative correlation, that is, the larger the value of covered area by a finger touch on the screen, the smaller the page turning time.

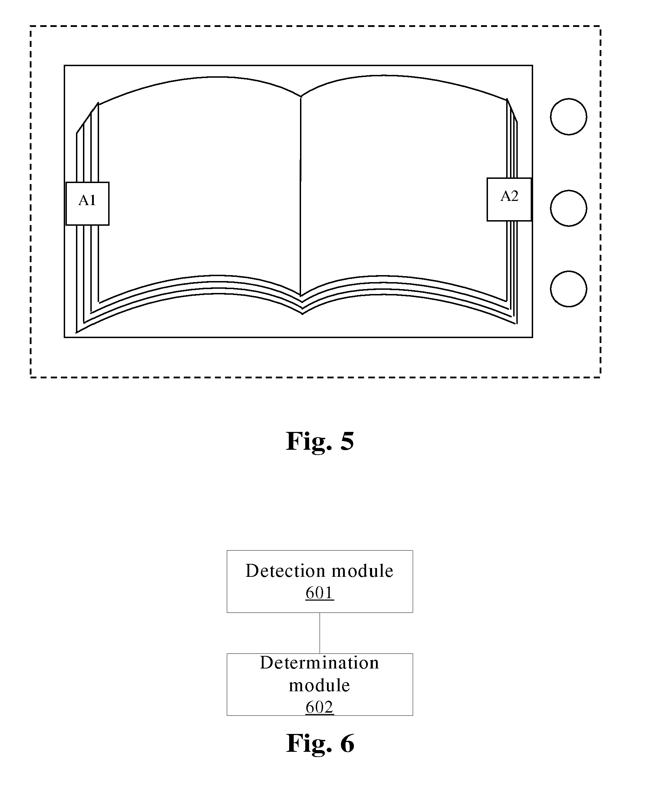

Step S406, a pre-set position is determined on the touch screen, and the setting of the pre-set position is based on the principle of simulating reading real books, for example, in Fig. 5, the pre-set positions are set at A1 and A2.

Step S408, the CPU detects a finger touch on the pre-set position of the screen continuously, and when a finger touches the pre-set position, the CPU will detect the level of the touched area value and judges corresponding page turning time thereof.

Step S410, the CPU starts timing and judges whether the page turning time obtained in step S408 is reached.

Step S412, When the CPU judges that the page turning time obtained in step S408 has been reached, the display pages in Fig. 5 will be converted according to a pre-set way. For example, in a content display mode which is from the left to the right, a finger touches the pre-set position A1, and the page turning way is displaying the content of a page, the page number of which is the current page number plus 2. A finger touches the pre-set position A2, and the page turning way is displaying the content of a page, the page number of which is the current page number minus 2. Before the page turning is completed, the screen can also correspondingly display a pre-set turning animation, for example, the screen can display the animation of a right side page which is turned left before displaying the content of a page, the page number of which is the current page number plus 2.

Step S414, the device judges whether the finger touches at the A1 and the A2 are cancelled, if yes, then the entire flow ends. If not, then the flow returns back to step S408 and completes the page turning steps again.

It can be derived from the above-mentioned analysis that the core idea of the embodiments of the present invention is providing a method for performing page turning on simulation books which comprises: firstly, the device pre-grades areas which are recognizable for the touch screen and corresponds to different page turning time. When a user touches a particular position on a display interface, the device detects the touched area value and judges page turning time corresponding thereto. Finally, the simulation book turns a pre-set page according to this turning time. After the page converts once, the device continuously detects whether there is a touch and the value of the area so as to perform the next cycle.

Terminal devices which can execute the above-mentioned methods have: a capacitive touch screen (or in input device which can sense a touched area), a display with a graphical user interface, one or more processors, a memory and one or more modules, programs or instruction sets which are saved in the memory to execute these methods. In some embodiments, the above-mentioned electronic devices provide a plurality of functions, with the wireless communication included therein.

Compared with the prior art documents, the speed control of page turning is realized by identifying the value of the covered area according to using the page turning method provided in the embodiments of the present invention. The page can be turned according to user's demand for speed, and if the touched area is large, then the page can realize fast convention; if the touched area is small, then the page can realize accurate positioning. Meanwhile, the mark of the particular position can be hidden or transparent and will not damage the simulation of the interface. To sum up, the page turning method provided in the embodiments of the present invention could make the reading of simulation books become more humanized.

Based on the same inventive idea, an embodiment of the present invention further provides an electronic-book page turning apparatus, the structural schematic diagram thereof as shown in Fig. 6, comprising:
a detection module 601 configured to detect a touched area of a touch screen on a mobile device; and
a determination module 602, coupled to the detection module 601 and configured to determine, according to the touched area, page turning speed of an electronic book displayed on the touch screen.

In a preferred embodiment, the determination module 602 is further configured to determine the page turning speed of the electronic book displayed on the touch screen according to the following rules: a size of the touched area is directly proportional to the page turning speed of the electronic book; or the size of the touched area is inversely proportional to the page turning speed of the electronic book.

In a preferred embodiment, the detection module 601 can also be configured to detect the touched area of at least one specified location on the touch screen.

Based on the same inventive idea, an embodiment of the present invention further provides a mobile device, comprising the above-mentioned electronic-book page turning apparatus.

From the description above, it can be seen that the present invention achieves the following technique effects:

In the embodiments of the present invention, a corresponding mapping relation is established between the touched area of a touch screen on a terminal device and the page turning speed of the electronic book, wherein the turning speed is determined according to the touched area, if the speed is required to be controlled, it is only need to control the touched area, and then the turning speed can be controlled and the page number can be precisely located while implementing fast page turning, without using the key of an independent device, which guarantees the simulation of the electronic books.

Obviously, those skilled in the art should know that each of the above-mentioned modules or steps of the present invention can be realized by universal computing apparatus; the modules or steps can be focused on a single computing apparatus, or distributed on the network formed by a plurality of computing apparatuses; optionally, they can be realized by the program codes which can be executed by the computing apparatuses; thereby, the modules or steps can be stored in a memory apparatus and executed by the computing apparatuses; and under some circumstances, the shown or described steps can be executed in different orders, or can be independently manufactured as each integrated circuit module, or a plurality of modules or steps thereof can be manufactured to be single integrated circuit module, thus to be realized. In this way, the present invention is not restricted to any particular hardware and software combination.

The descriptions above are only the preferable embodiment of the present invention, which are not used to restrict the present invention, for a person skilled in the art, the present invention may have various changes and variations. Any amendments, equivalent substitutions, improvements, etc. within the spirit and principle of the present invention are all included in the scope of the protection of the present invention.

## Claims

1. An electronic-book page turning method, **characterized by** comprising:
detecting a touched area of a touch screen on a terminal device; and
determining, according to the touched area, page turning speed of an electronic book displayed on the touch screen.

2. The method according to claim 1, **characterized in that** determining, according to the touched area, the page turning speed of the electronic book displayed on the touch screen comprises:
a size of the touched area being directly proportional to the page turning speed of the electronic book; or,
a size of the touched area being inversely proportional to the page turning speed of the electronic book.

3. The method according to claim 1, **characterized in that** the touched area comprises: an area touched by at least one user's finger.

4. The method according to claim 3, **characterized in that** determining, according to the touched area, the page turning speed of the electronic book displayed on the touch screen comprises:
detecting a capacitance value of a capacitor composed of the finger and a screen body of the touch screen; and
determining that the touched area by a finger touch on the screen body increases when it is detected that the capacitance value of the capacitor increases, and speeding up the page turning speed of the electronic book.

5. The method according to any one of claims 1-4, **characterized in that** detecting the touched area of the touch screen on the terminal device comprises:
detecting the touched area of at least one specified location on the touch screen.

6. The method according to any one of claims 1-4, **characterized in that** after determining, according to the touched area, the page turning speed of the electronic book displayed on the touch screen, the method further comprises: the electronic book performing page turning according to the page turning speed.

7. The method according to claim 6, **characterized in that** after the electronic book performs page turning according to the page turning speed, if it is detected that the touch screen is touched again, then the page turning speed of the electronic book is redefined according to a touched area.

8. An electronic-book page turning apparatus, **characterized by** comprising:
a detection module configured to detect a touched area of a touch screen on a mobile device; and
a determination module configured to determine, according to the touched area, page turning speed of an electronic book displayed on the touch screen.

9. The apparatus according to claim 8, **characterized in that** the determination module is further configured to determine the page turning speed of the electronic book displayed on the touch screen according to the following rules: a size of the touched area is directly proportional to the page turning speed of the electronic book; or the size of the touched area is inversely proportional to the page turning speed of the electronic book.

10. The apparatus according to claim 8 or 9, **characterized in that** the detection module is further configured to detect the touched area of at least one specified location on the touch screen.

11. A mobile device, **characterized by** comprising the electronic-book page turning apparatus as claimed in any one of claims 8-10.
